# EUROPÄISCHE PATENTANMELDUNG

(11) **EP 0 796 900 A2**
(43) Veröffentlichungstag der Anmeldung: **24.09.1997**
(21) Anmeldenummer: 97104012.6
(22) Anmeldetag: 11.03.1997
(51) Int. Cl.: C09B 67/08, C09D 5/00, C09D 11/02

(54) **Für wasserverdünnbare Druckfarben und Lacke geeignete Pigmentzubereitungen**

(30) Priorität: 19.03.1996 DE 19610702
(71) Anmelder: BASF AKTIENGESELLSCHAFT, 67056 Ludwigshafen (DE)
(72) Erfinder: Reisacher, Hansulrich, Dr., 74343 Sachsenheim (DE); Jesse, Joachim, Dr., 67256 Weisenheim (DE)

(57) **Zusammenfassung**

Pigmentzubereitungen, erhältlich durch Belegung eines in wäßrigem Medium suspendierten organischen Pigments mit einem Harz, das eine Säurezahl von ≥ 200 aufweist, und einem nichtionischen oberflächenaktiven Mittel, Isolierung und gewünschtenfalls Trocknung und mechanische Zerkleinerung des belegten Pigments,
sowie Herstellung und Verwendung der Pigmentzubereitungen zum Pigmentieren von wasserverdünnbaren Druckfarben und Lacken.

## Beschreibung

Die vorliegende Erfindung betrifft neue Pigmentzubereitungen, welche durch Belegung eines in wäßrigem Medium suspendierten organischen Pigments mit einem Harz, das eine Säurezahl von ≥ 200 aufweist, und einem nichtionischen oberflächenaktiven Mittel, Isolierung und gewünschtenfalls Trocknung und mechanische Zerkleinerung des belegten Pigments zugänglich sind.

Außerdem betrifft die Erfindung die Herstellung dieser Pigmentzubereitungen und ihre Verwendung zum Pigmentieren von wasserverdünnbaren Drucken und Lacken sowie wasserverdünnbare Druckfarben und Lacke, welche diese Pigmentzubereitungen enthalten.

Bekanntermaßen fallen organische Pigmente bei der Synthese in einer Form an, welche bei direkter Einarbeitung in Bindemittelsysteme für Druckfarben oder Lacke zu schlechten rheologischen Eigenschaften und nichtzufriedenstellender Koloristik der pigmentierten Systeme führt. Daher wird durch eine zusätzliche Behandlung der Pigmente versucht, deren anwendungstechnische Eigenschaften zu verbessern.

So wird in der EP-A-84 645 die Belegung von Pigmenten mit polymeren Umsetzungsprodukten von Ethylendiamin, Propylenoxid (PO) und Ethylenoxid (EO), welche überwiegend aus PO bestehen, durch gemeinsames trockenes oder nasses Vermahlen und anschließende Sprüh- oder Gefriertrocknung sowie die Belegung von C.I. Pigment Red 48:1 mit einem Ethylendiamin/PO/EO-Addukt und einem Styrol/Acrylsäure-Harz durch gemeinsames Verkneten beschrieben. Aus der DE-A-39 20 251 ist die Herstellung von ebenfalls für wasserhaltige Druckfarben geeigneten Pigmentzubereitungen durch Belegung der Pigmente mit Ethylendiamin/PO/EO-Addukten mit überwiegendem EO-Anteil in wäßriger Suspension bekannt.

In der EP-A-592 907 werden in wäßrigen Bindemittelsystemen einsetzbare Azopigmente durch Auffällen der Calciumsalze von Acrylatharzen erhalten. In der EP-A-39 307 wird die Belegung von Azopigmenten mit Acrylatharzen niedriger Säurezahl beschrieben.

Die bekannten Pigmentzubereitungen sind jedoch in verschiedener Hinsicht nicht zufriedenstellend, sei es aufgrund ihrer Anwendungseigenschaften, die häufig zu unbefriedigender Transparenz der mit ihnen pigmentierten Druckfarbensysteme führen, sei es aufgrund der aufwendigen Art ihrer Herstellung.

Der Erfindung lag daher die Aufgabe zugrunde, Zubereitungen organischer Pigmente bereitzustellen, welche für wasserhaltige Bindemittelsysteme geeignet sind und vorteilhafte Anwendungseigenschaften aufweisen.

Demgemäß wurden Pigmentzubereitungen gefunden, welche durch Belegung eines in wäßrigem Medium suspendierten organischen Pigments mit einem Harz, das eine Säurezahl von ≥ 200 aufweist, und einem nichtionischen oberflächenaktiven Mittel, Isolierung und gewünschtenfalls Trocknung und mechanische Zerkleinerung des belegten Pigments erhältlich sind.

Weiterhin wurde das hierdurch definierte Verfahren zur Herstellung der Pigmentzubereitungen gefunden.

Außerdem wurde die Verwendung der Pigmentzubereitungen zur Pigmentierung von wasserverdünnbaren Druckfarben und Lacken gefunden.

Die neuen Pigmentzubereitungen sind vorteilhaft nach dem erfindungsgemäßen Herstellungsverfahren erhältlich, bei dem das in wäßrigem Medium möglichst feinteilig suspendierte organische Pigment (a) mit einem Harz (b), das eine Säurezahl von ≥ 200 aufweist, und einem nichtionischen oberflächenaktiven Mittel (c) bzw. den Umsetzungsprodukten dieser Substanzen belegt wird und das derart belegte Pigment gewünschtenfalls nach seiner Isolierung und Trocknung noch einer trockenen mechanischen Zerkleinerung unterzogen wird.

Als Pigment (a) kommen alle organischen Pigmente in feinteiliger Form in Betracht. Geeignete Pigmentklassen sind beispielsweise Monoazo-, Disazo-, Anthrachinon-, Anthrapyrimidin-, Chinacridon-, Chinophthalon-, Diketopyrrolopyrrol-, Dioxazin-, Flavanthron-, Indanthron-, Isoindolin-, Isoindolinon-, Isoviolanthron-, Perinon-, Perylen-, Phthalocyanin-, Pyranthron-, Triphenylmethan- und Thioindigopigmente sowie Metallkomplexe dieser Pigmente.

Von besonderen Interesse sind die Phthalocyaninpigmente und vor allem die Azopigmente, wobei β-Naphthol- und Naphthol-AS-Pigmente und ihre verlackten Formen und verlackte BONS-Pigmente als Monoazopigmente und Bisacetessigsäurearylid-, Disazopyrazolon- und insbesondere Diarylgelbpigmente als Disazopigmente aufgeführt sein sollen.

Beispielhaft seien folgende Pigmente aus den einzelnen Klassen genannt:
- - Monoazopigmente:: C.I. Pigment Brown 25;
C.I. Pigment Orange 5, 13, 36 und 67;
C.I. Pigment Red 1, 2, 3, 48:1, 48:4, 49, 49:1, 52:1, 52:2, 53, 53:1, 57:1, 112, 146, 170, 184 und 251;
C.I. Pigment Yellow 1, 3, 73, 74, 65, 97, 151 und 183;
- - Disazopigmente:: C.I. Pigment Orange 16 und 34;
C.I. Pigment Red 144 und 166;
C.I. Pigment Yellow 12, 13, 14, 16, 17, 83, 106, 113, 126, 127, 174, 176 und 188;
- - Anthrachinonpigmente:: C.I. Pigment Yellow 147 und 177;
C.I. Pigment Violet 31;
- - Anthrapyrimidinpigmente:: C.I. Pigment Yellow 108;
- - Chinacridonpigmente:: C.I. Pigment Red 122, 202 und 20;
C.I. Pigment Violet 19;
- - Chinophthalonpigmente:: C.I. Pigment Yellow 138;
- - Dioxazinpigmente:: C.I. Pigment Violet 23 und 37;
- - Flavanthronpigmente:: C.I. Pigment Yellow 24;
- - Indanthronpigmente:: C.I. Pigment Blue 60 und 64;
- - Isoindolinpigmente:: C.I. Pigment Orange 69;
C.I. Pigment Red 260;
C.I. Pigment Yellow 139 und 185;
- - Isoindolinonpigmente:: C.I. Pigment Orange 61;
C.I. Pigment Red 257 und 260;
C.I. Pigment Yellow 109, 110, 173 und 185;
- - Metallkomplexpigmente:: C.I. Pigment Yellow 117 und 153;
C.I. Pigment Green 8;
- - Perinonpigmente:: C.I. Pigment Orange 43;
C.I. Pigment Red 194;
- - Perylenpigmente:: C.I. Pigment Black 31 und 32;
C.I. Pigment Red 123, 149, 178, 179, 190 und 224;
C.I. Pigment Violet 29;
- - Phthalocyaninpigmente:: C.I. Pigment Blue 15, 15:1, 15:2, 15:3, 15:4, 15:6 und 16;
C.I. Pigment Green 7 und 36;
- - Pyranthronpigmente:: C.I. Pigment Orange 51;
C.I. Pigment Red 216;
- - Thioindigopigmente:: C.I. Pigment Red 88;
- - Triphenylmethanpigmente:: C.I. Pigment Blue 61 und 62;
C.I. Pigment Green 1;
C.I. Pigment Red 81 und 169;
C.I. Pigment Violet 2, 3 und 27;
- -: C.I. Pigment Black 1 (Anilinschwarz);
- -: C.I. Pigment Yellow 101 (Aldazingelb).

Als Harz (b) eignen sich dabei neben vollsynthetischen Harzen wie Acrylatharzen vor allem halbsynthetische Harze, insbesondere Kolophoniumderivate, die Carboxylgruppen tragen, wie malein- oder fumarsäuremodifiziertes Kolophonium, das eine Säurezahl von ≥ 200, bevorzugt von 240 bis 320, besonders bevorzugt von 280 bis 320, aufweist.

Harze dieser Art sind allgemein bekannt und im Handel erhältlich.

Als nichtionische oberflächenaktive Mittel eignen sich z.B. die Oxalkylate, besonders die Oxpropylate und ganz besonders die Oxethylate, auch gemischte Oxpropylate/Oxethylate, von gesättigten oder ungesättigten aliphatischen und aromatischen Alkoholen und aliphatischen Aminen.

Geeignete aliphatische Alkohole enthalten dabei in der Regel 6 bis 26 C-Atome, bevorzugt 8 bis 18 C-Atome. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol, 2-Hexyldecanol, Heptadecanol, Octadecanol, 2-Heptylundecanol, Dodecanol, 2-Octyldodecanol, 2-Nonyltridecanol, 2-Decyltetradecanol, Oleylalkohol und 9-Octadecenol sowie auch Mischungen dieser Alkohole wie C₁₃/C₁₅- und C₁₆/C₁₈-Alkohole genannt. Von besonderem Interesse sind die Fettalkohole, die durch Fettspaltung und Reduktion aus natürlichen Rohstoffen gewonnen werden, und die synthetischen Fettalkohole aus der Oxosynthese. Die Oxalkylate dieser Alkohole weisen üblicherweise mittlere Molekulargewichte von 400 bis 2000 auf.

Als aromatische Alkohole eignen sich neben α- und β-Naphthol und deren C₁-C₄-Alkylderivaten insbesondere Phenol und seine C₁-C₁₂-Alkylderivate wie Hexylphenol, Heptylphenol, Octylphenol, Nonylphenol, Isononylphenol, Undecylphenol, Dodecylphenol, Di- und Tributylphenol und Dinonylphenol.

Geeignete aliphatische Amine entsprechen den oben aufgeführten aliphatischen Alkoholen.

Neben den Oxalkylaten dieser einwertigen Amine sind die Oxalkylate, vor allem die gemischten PO/EO-Addukte, von mehrwertigen Aminen, insbesondere von zwei- bis fünfwertigen Aminen, wie sie aus der DE-A-25 02 839 bekannt sind, von besonderem Interesse als nichtionische oberflächenaktive Mittel (c).

Beispiele für geeignete, die Formel H₂N-(R-NR¹)ₙ-H (R: C₂-C₆-Alkylen; R¹: Wasserstoff oder C₁-C₆-Alkyl; n: 1 bis 5) aufweisende, mehrwertige Amine sind Diethylentriamin, Triethylentetramin, Tetraethylenpentamin, Propylendiamin-1,3, Dipropylentriamin, 3-Amino-1-ethylenaminopropan, Dihexamethylentriamin, 1,6-Bis-(3-aminopropylamino)hexan, N-Methyldipropylentriamin und insbesondere Ethylendiamin. Diese Oxalkylate werden durch Umsetzung des Amins zunächst mit Propylenoxid und anschließende Umsetzung des polyoxpropylierten Amins mit Ehtylenoxid hergestellt und weisen in der Regel mittlere Molekulargewichte von 1000 bis 45000, vorzugsweise 3000 bis 40000, auf.

Eine weitere Gruppe geeigneter nichtionischer oberflächenaktiver Mittel (c) sind PO/EO-Blockpolymerisate, insbesondere solche mit Polypropylenglykol als zentralem Molekülteil. Das mittlere Molekulargewicht des Propylenglykolblocks beträgt dabei üblicherweise 850 bis 3250, der Anteil an Polyethylenglykol im Polymermolekül liegt in der Regel bei 10 bis 50 %.

Die genannten nichtionischen oberflächenaktiven Mittel sind allgemein bekannt und im Handel erhältlich. Selbstverständlich können wie bei den weiteren Komponenten der neuen Pigmentzubereitungen auch Mischungen dieser Mittel eingesetzt werden.

In der Regel enthalten die erfindungsgemäßen Pigmentzubereitungen 50 bis 94 Gew.-% des organischen Pigments (a), 3 bis 30 Gew.-% des Harzes (b) und 3 bis 20 Gew.-% des oberflächenaktiven Mittels (c).

Durch die Harzbelegung wird die Farbstärke des organischen Pigments verbessert. Je nach der Art des Pigments sind dabei unterschiedliche Belegungsmengen bevorzugt. So werden z.B. Azopigmente bevorzugt mit 5 bis 50, besonders bevorzugt mit 10 bis 40 Gew.-% des Harzes (b) und bevorzugt mit 3 bis 25, besonders bevorzugt mit 5 bis 20 Gew.-% des oberflächenaktiven Mittels (c), jeweils bezogen auf das Azopigment, belegt. Bei Phthalocyaninpigmenten liegen bevorzugte Mengen des Harzes (b) bei 2 bis 10 Gew.-%, insbesondere 2,5 bis 7,5 Gew.-%, und bevorzugte Mengen des oberflächenaktiven Mittels (c) bei 4 bis 20 Gew.-%, vor allem 5 bis 15 Gew.-%, ebenfalls jeweils auf das Phthalocyaninpigment bezogen.

Selbstverständlich können den erfindungsgemäßen Pigmentzubereitungen noch weitere, für Pigmentzubereitungen übliche Hilfsmittel wie Weichmacher, Wachse, Stabilisatoren und Füllmittel sowie auch Harze niedrigerer Säurezahl zugesetzt werden.

Die erfindungsgemäße Belegung des organischen Pigments erfolgt an Pigmentteilchen, die möglichst feinteilig in einem wäßrigen Medium suspendiert sind. Solche Suspensionen können durch Aufrühren des bei der Pigmentsynthese anfallenden, wasserfeuchten Preßkuchens in Wasser erhalten werden. Diese Art der Belegung ist z.B. bei β-Kupferphthalocyaninpigmenten, die nach der Salzknetung von rohem Kupferphthalocyanin als wäßriger Preßkuchen isoliert werden, empfehlenswert. Vorteilhaft kann die Belegung auch mit der Pigmentsynthese gekoppelt werden, indem Harz (b) und oberflächenaktives Mittel (c) dem Reaktionsgemisch einzeln oder gemeinsam vor, während oder nach der Synthese des Pigments zugesetzt werden. Als Beispiel sei hier die Belegung von Azopigmenten angeführt, die in der genannten Weise mit der Kupplungsreaktion zwischen di- oder tetrazotierter Azokomponente und Kupplungskomponente kombiniert werden kann.

Eine bevorzugte Ausführungsform des erfindungsgemäßen Herstellungsverfahrens besteht insbesondere bei den Azopigmenten darin, das Harz (b) und das oberflächenaktive Mittel (c) der bei der Pigmentsynthese anfallenden Pigmentsuspension zuzugeben. Das Harz wird dabei zweckmäßigerweise als gelöste Harzseife zugesetzt, es kann jedoch auch durch Zugabe insbesondere einer wäßrigen anorganischen Base wie Natronlauge erst in der Pigmentsuspension gelöst werden. Bei der Belegung von Azopigmenten empfiehlt es sich ohnehin, die Pigmentsuspension zunächst auf einen pH-Wert von in der Regel 8 bis 12 einzustellen. Durch anschließende Zugabe einer organischen Säure wie Essigsäure oder bevorzugt einer anorganischen Säure wie Salzsäure oder Schwefelsäure wird der pH-Wert der Suspension auf etwa 4 bis 6 erniedrigt und das Harz auf die Pigmentteilchen aufgefällt.

Besonders günstig ist es, die Harzausfällung in Gegenwart des oberflächenaktiven Mittels (c) vorzunehmen, d.h. dieses Mittel der Pigmentsuspension vor der Säurezugabe und vorzugsweise auch vor der Harzzugabe zuzusetzen.

Weiterhin erfolgt die Belegung des Pigments vorzugsweise in der Wärme. Hierfür sind Temperaturen von in der Regel 60 bis 100°C, vor allem 80 bis etwa 98°C (entsprechend der Siedetemperatur) geeignet. Zweckmäßigerweise erhitzt man die Pigmentsuspension vor der Harzausfällung auf die gewünschte Temperatur (die Zugabe von oberflächenaktivem Mittel und/oder Harz kann dabei vor oder nach dem Erhitzen erfolgen), rührt die Suspension etwa 10 bis 30 min bei dieser Temperatur, gibt dann die Säure zu und rührt etwa 10 bis 30 min bei der gewählten Temperatur nach.

Die anschließende Isolierung des belegten Pigments kann nach Abkühlen auf in der Regel 40 bis 60°C in üblicher Weise durch Filtration, Waschen mit warmem Wasser und Trocknen bei 50 bis 80°C vorgenommen werden. Das belegte Pigment kann jedoch auch direkt in Form des bei der Filtration erhaltenen hochkonzentrierten Preßkuchens mit einem Pigmentgehalt von üblicherweise 40 bis 50 Gew.-% in das jeweilige Anwendungsmedium eingearbeitet werden.

Häufig ist es zweckmäßig, das isolierte und getrocknete Pigment noch einer trockenen, mechanischen Zerkleinerung, z.B. einer Mahlung in einer Kugelmühle oder einer Stiftmühle, zu unterziehen.

Die erfindungsgemäßen Pigmentzubereitungen eignen sich vorteilhaft zur Pigmentierung von wasserverdünnbaren Druckfarben und Lacken und zeichnen sich dabei durch hervorragende Anwendungseigenschaften wie gute Dispergierbarkeit und gute Koloristik, insbesondere guten Glanz und sehr gute Transparenz (Lasur), aus. Ein weiterer Vorteil besteht in der Einfachheit und Wirtschaftlichkeit ihrer Herstellung.

### Beispiele

### I) Herstellung erfindungsgemäßer Pigmentzubereitungen

### Beispiele 1 bis 18

Zunächst wurden auf allgemein bekannte Weise folgende Azopigmente hergestellt:

### C.I. Pigment Yellow 13:

Zur Herstellung der Tetrazokomponente wurde eine Lösung von 73,8 g 3,3'-Dichlor-4,4'-diaminodiphenyl (3,3'-Dichlorbenzidin) in 1750 ml 1 n Salzsäure bei 0°C mit 41,1 g Natriumnitrit versetzt. Überschüssige salpetrige Säure wurde anschließend mit Amidosulfonsäure entfernt, dann wurde die Lösung filtriert.

Zur Herstellung der Kupplungskomponente wurden 126 g Acetessigsäure-2,4-dimethylanilid in 807 ml 1,5 n Natronlauge gelöst.

Im Kupplungsgefäß wurden 820 ml 0,5 n Essigsäure vorgelegt. Dann wurde so viel Kupplungskomponente zugegeben, bis ein pH-Wert von 4,5 erreicht war. Danach wurden die Tetrazokomponente und die restliche Kupplungskomponente gleichzeitig zugegeben, wobei der pH-Wert bei 4,5 und die Temperatur bei 20°C gehalten wurde.

### C.I. Pigment Yellow 12:

Die Herstellung der Pigmentsuspension erfolgte analog zu C.I. Pigment Yellow 13 durch Kupplung von 80,4 g tetrazotiertem 3,3'-Dichlorbenzidin (44,7 g Natriumnitrit) mit 118 g Acetessigsäureanilid.

### C.I. Pigment Yellow 14:

Die Herstellung der Pigmentsuspension erfolgte analog zu C.I. Pigment Yellow 13 durch Kupplung von 77 g tetrazotiertem 3,3'-Dichlorbenzidin (42 g Natriumnitrit) mit 112 g Acetessigsäure-2-methyl-anilid.

### C.I. Pigment Yellow 83:

Die Herstellung der Pigmentsuspension erfolgte analog zu C.I. Pigment Yellow 13 durch Kupplung von 61,9 g tetrazotiertem 3,3'-Dichlorbenzidin mit 139,4 g Acetessigsäure-2,5-dimethoxy-4-chloranilid.

### C.I. Pigment Yellow 74:

Zur Herstellung der Tetrazokomponente wurde eine Lösung von 87,0 g 2-Methoxy-4-nitroanilin in 1560 ml 1 n Salzsäure bei 0°C mit 34,9 g Natriumnitrit versetzt. Überschüssige salpetrige Säure wurde anschließend mit Amidosulfonsäure entfernt, dann wurde die Lösung filtriert.

Zur Herstellung der Kupplungskomponente wurden 118,2 g Acetessigsäure-2-methoxyanilid in 720 ml 1,5 n Natronlauge gelöst.

Im Kupplungsgefäß wurden 714 ml 0,5 n Essigsäure vorgelegt.

Die Kupplungsreaktion wurde dann analog zu C.I. Pigment Yellow 13 vorgenommen.

Für die Pigmentbelegung wurden die bei der Synthese anfallenden wäßrigen Suspensionen verwendet, die jeweils ca. 200 g Azopigment enthielten.

### Variante A:

Zu der Pigmentsuspension wurden x g des oberflächenaktiven Mittels (c) in Form einer 10 gew.-%igen wäßrigen Lösung gegeben. Dann wurde die Suspension auf 95°C erhitzt und 5 min bei dieser Temperatur gerührt. Nach Einstellung eines pH-Wertes von 9,5 durch Zugabe von 20 gew.-%iger Natronlauge wurden y g des Harzes (b), gelöst in z g 25 gew.-%iger Natronlauge, zugegeben. Nach weiterem 30-minütigen Rühren bei 95°C wurde durch Zugabe von 10 gew.-%iger Salzsäure ein pH-Wert von 4 eingestellt. Dann wurde weitere 15 min bei 95°C gerührt.

Nach Abkühlen auf 60°C durch Zugabe von kaltem Wasser wurde das belegte Pigment abfiltriert, mit 40°C warmem Wasser gewaschen, bei 60°C getrocknet und in einer Stiftmühle gemahlen.

### Variante B:

Die Pigmentsuspension wurde durch Zugabe von 20 gew.-%iger Natronlauge auf einen pH-Wert von 9,5 gebracht. Dann wurden y g des Harzes (b), gelöst in z g 25 gew.-%iger Natronlauge, zugegeben. Nach Erhitzen der Suspension auf 95°C und 30-minütigem Rühren bei dieser Temperatur wurde durch Zugabe von 10 gew.-%iger Salzsäure ein pH-Wert von 4 eingestellt. Dann wurden x g des oberflächenaktiven Mittels (c) in Form einer 10 gew.-%igen wäßrigen Lösung zugegeben.

Nach 15-minütigem Nachrühren bei 95°C wurde die Aufarbeitung wie bei Variante A vorgenommen.

### Beispiele 19 bis 21

Zunächst wurde β-Kupferphthalocyanin (C.I. Pigment Blue 15:3) durch Knetung von rohem Kupferphthalocyanin mit Natriumchlorid in Gegenwart von Polyethylenglykol hergestellt (vgl. Ullmans Enzyklopädie der technischen Chemie, 4. Auflage, Band 18, Seite 512 (1979)).

Für die Pigmentbelegung wurden wäßrige Suspensionen verwendet, die durch Suspendieren von jeweils 63 g β-Kupferphthalocyanin in Form des nach der Salzknetung isolierten, 12,5 gew.-%igen wäßrigen Preßkuchens in 450 ml Wasser erhalten wurden.

### Variante C:

Zu der Pigmentsuspension wurden x g des oberflächenaktiven Mittels (c) in Form einer 10 gew.-%igen wäßrigen Lösung gegeben. Nach Erhitzen der Suspension auf 90°C und 15-minütigem Rühren bei dieser Temperatur wurden y g des Harzes (b) (als 10 gew.-%ige Lösung mit z g Natriumhydroxid in Wasser) zugegeben.

Nach 40-minütigem Nachrühren bei 90°C und anschließendem Abkühlen auf 60°C durch Zugabe von kaltem Wasser wurde das belegte Pigment abfiltriert, mit 60°C warmem Wasser neutral gewaschen, bei 75°C getrocknet und in einer Labormühle gemahlen.

### Variante D:

Zu der Pigmentsuspension wurden y g des Harzes (b) (als 10 gew.-%ige Lösung mit z g Natriumhydroxid in Wasser) gegeben. Nach Erhitzen der Suspension auf 90°C und 40-minütigem Rühren bei dieser Temperatur wurde durch Zugabe mit verdünnter Salzsäure ein pH-Wert von 4 eingestellt. Dann wurden x g des oberflächenaktiven Mittels (c) in Form einer 10 gew.-%igen wäßrigen Lösung zugegeben.

Nach 15-minütigem Nachrühren bei 90°C wurde wie bei Variante C aufgearbeitet.

Weitere Einzelheiten zu diesen Versuchen sowie deren Ergebnisse sind Tabelle 1 zu entnehmen.

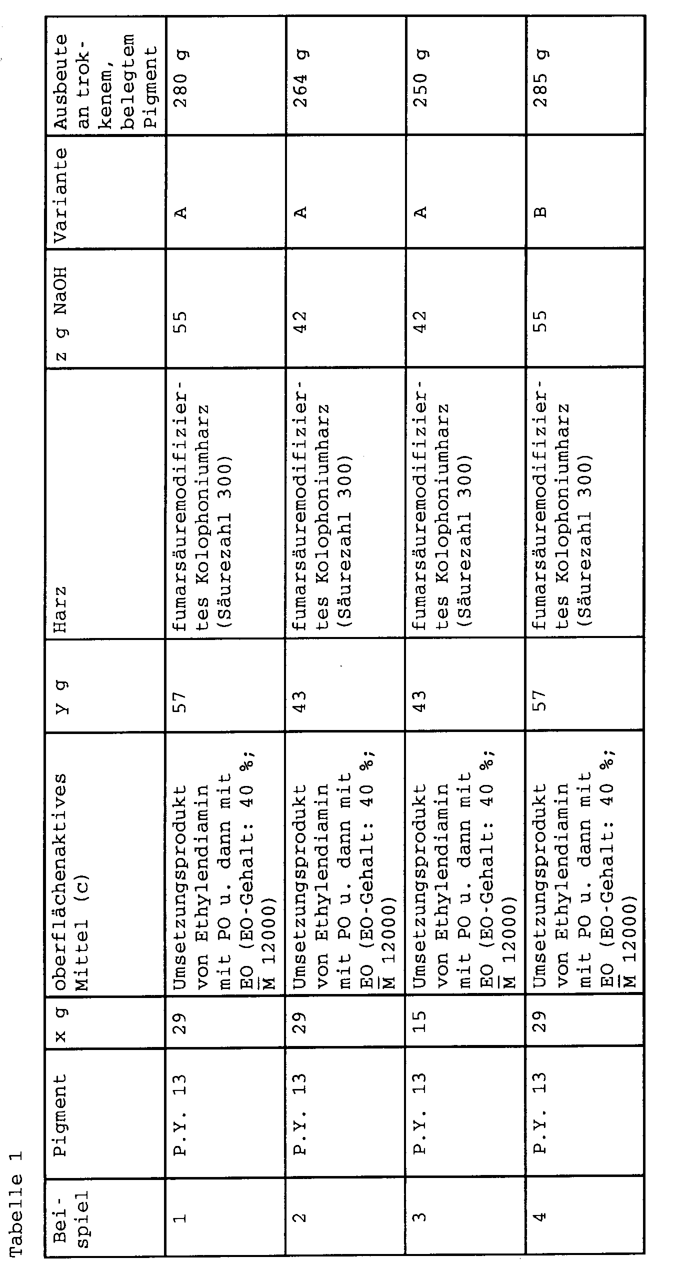

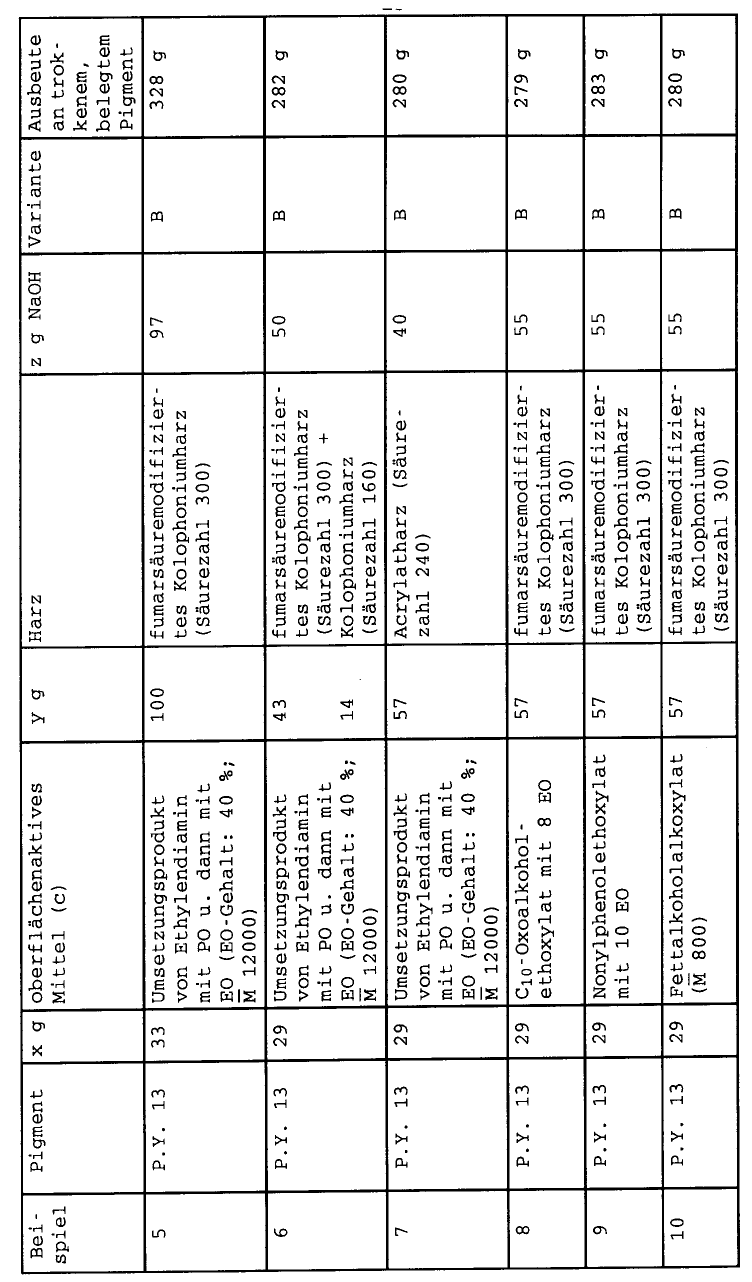

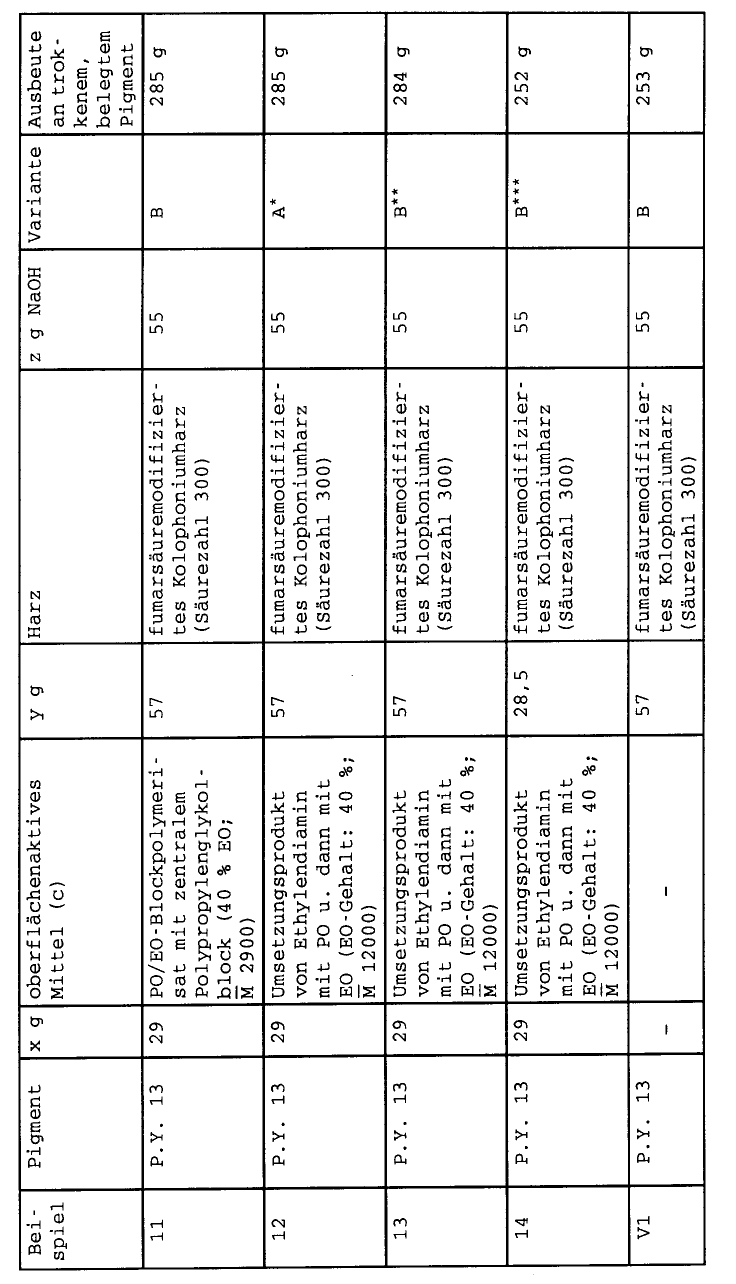

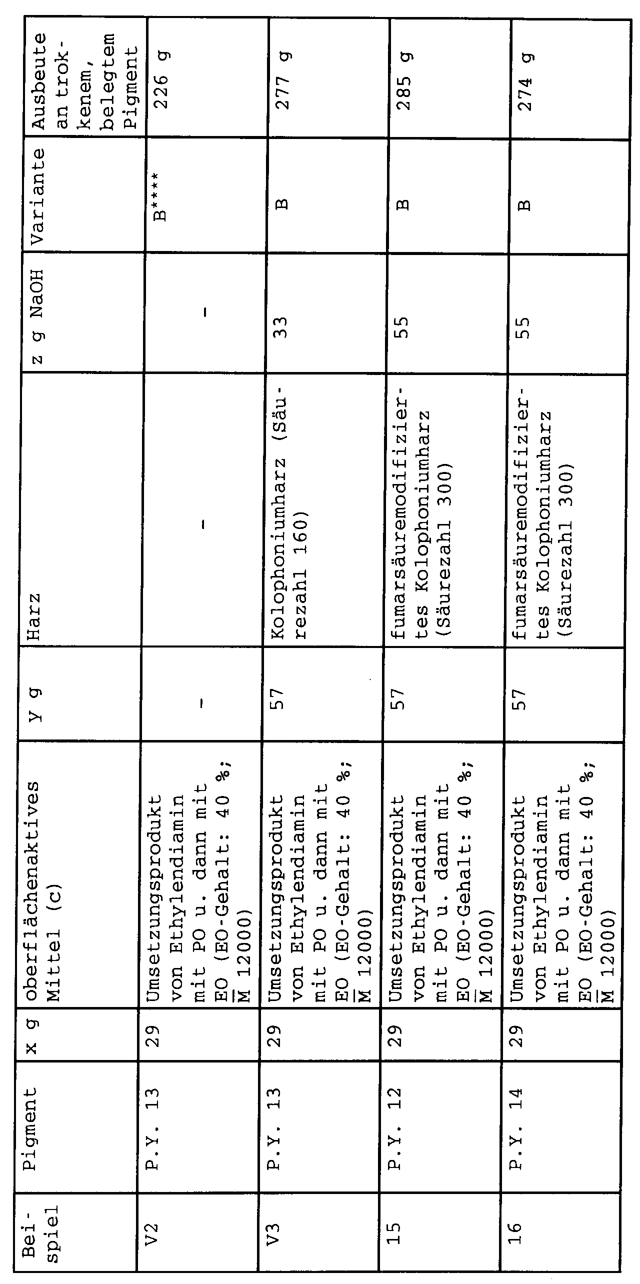

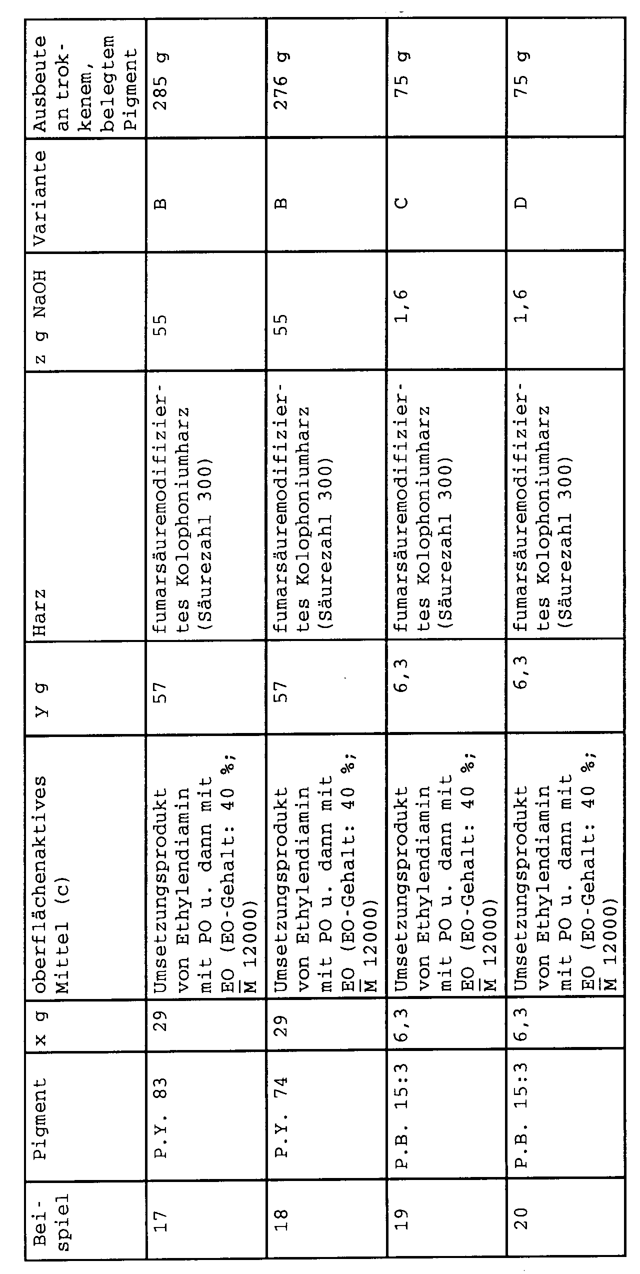

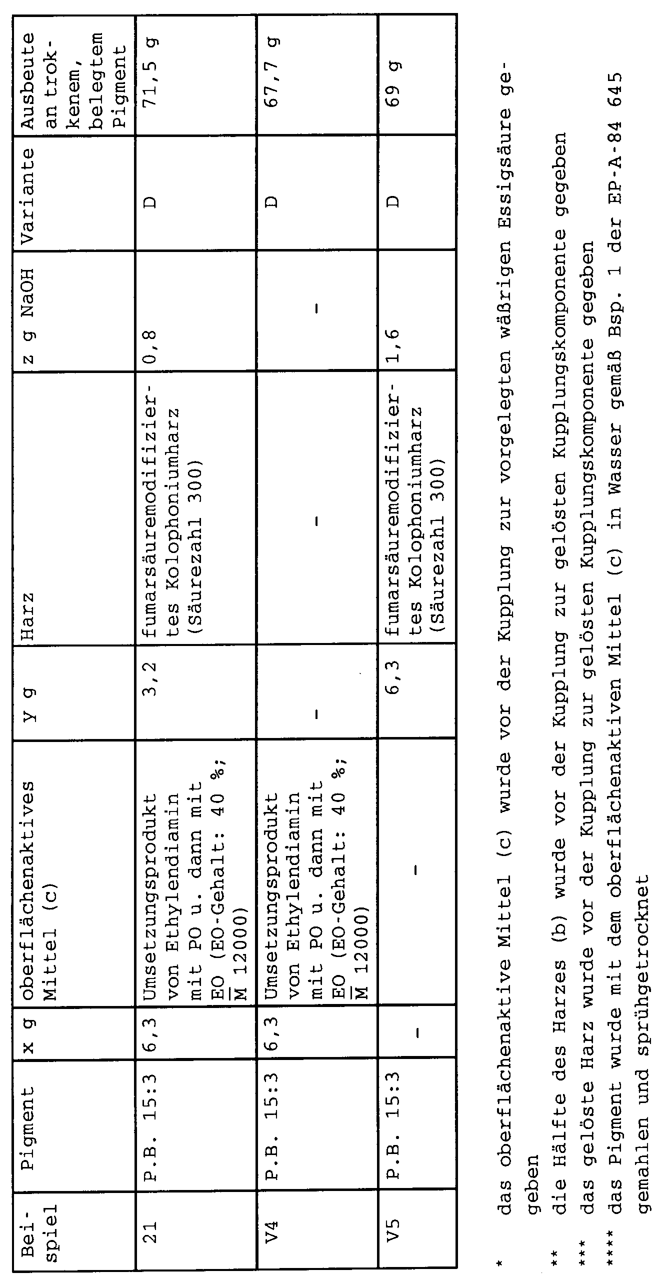

### II) Beurteilung der koloristischen Eigenschaften

Zur Beurteilung der koloristischen Eigenschaften wurden Druckfarben hergestellt, indem jeweils 24 g des belegten Pigments in 126 g eines handelsüblichen wasserbasierenden Acrylat-Anreibelackes mit 35,5 Gew.-% Festkörperanteil mit 300 g Stahlkugeln (2-3 mm Durchmesser) 30 min auf dem Skandex angerieben wurden und die erhaltene Anreibung 30 min im Temperierschrank bei 20°C gelagert und anschließend mit weiterem Anreibelack auf einen Pigmentgehalt von 8 Gew.-% verschnitten wurde.

Die Bewertung des Glanzes erfolgte durch Messung an Rakelungen dieser Druckfarben auf Algro-finess-Papier (Hannoversche Papierfabriken, Alsfeld) (Beispiele 1 bis 18 und V1 bis V3) bzw. Acetatfolie (Beispiele 19 bis 21 und V4 bis V5), die mit einer 12 µm Spiralrakel bzw. einem Lackschleudergerät (Fa. Engelsmann, Ludwigshafen) angefertigt wurden, mit dem Glanzmeßgerät micro-Tri-gloss bzw. Multigloss (beide Fa. Byk-Gardner) bei einem Meßwinkel von 60°.

Die Bewertung der Lasur erfolgte visuell an Rakelungen der Druckfarben auf Aluminiumfolie, die ebenfalls mit einer 12 µm Spiralrakel angefertigt wurden, anhand folgender Skala:
- + 5: deutlich lasierender
- + 4: lasierender
- + 3: etwas lasierender
- + 2: wenig lasierender
- + 1: Spur lasierender
- 0: Standard (Vergleich mit unbelegtem Pigment)
- - 1: Spur deckender
- - 2: wenig deckender
- - 3: etwas deckender
- - 4: deckender
- - 5: deutlich deckender

Die Ergebnisse dieser Prüfungen sind in Tabelle 2 zusammengestellt (das unbelegte C.I. Pigment Yellow 13 entspricht dabei dem Vergleichsbeispiel V und das unbelegte C.I. Pigment Blue 15:3 dem Vergleichsbeispiel V').

**Tabelle 2**

| Druckfarben mit dem Pigment aus Beispiel | Glanz | Lasur |
|---|---|---|
| 1 | 23 | + 5 |
| 2 | 20 | + 5 |
| 3 | 24 | + 5 |
| 4 | 18 | + 5 |
| 5 | 18 | + 5 |
| 6 | 16 | + 5 |
| 7 | 17 | + 3 |
| 8 | 8 | + 3 |
| 9 | 13 | + 3 |
| 10 | 12 | + 3 |
| 11 | 8 | + 3 |
| 12 | 24 | + 3 |
| 13 | 20 | + 3 |
| 14 | 22 | + 3 |
| V | 3 | - 5 |
| V1 | 3 | - 5 |
| V2 | 19 | 0 |
| V3 | 17 | - 3 |
| 15 | 9 | + 4 |
| 16 | 15 | + 5 |
| 17 | 10 | + 3 |
| 18 | 15 | + 3 |
| 19 | 74 | + 4 |
| 20 | 67 | + 2 |
| 21 | 64 | + 2 |
| V' | 37 | 0 |
| V4 | 53 | - 2 |
| V5 | 12 | - 5 |

## Patentansprüche

1. Pigmentzubereitungen, erhältlich durch Belegung eines in wäßrigem Medium suspendierten organischen Pigments mit einem Harz, das eine Säurezahl von ≥ 200 aufweist, und einem nichtionischen oberflächenaktiven Mittel, Isolierung und gewünschtenfalls Trocknung und mechanische Zerkleinerung des belegten Pigments.

2. Pigmentzubereitungen nach Anspruch 1, die als Harz (b) ein fumarsäure- oder maleinsäuremodifiziertes Kolophoniumharz enthalten.

3. Pigmentzubereitungen nach Anspruch 1 oder 2, die als oberflächenaktives Mittel (c) Oxethylate von aliphatischen C₈-C₁₈-Alkoholen, C₁-C₁₂-Alkylphenolen oder aliphatischen C₈-C₁₈-Alkylaminen, Propylenoxid/Ethylenoxidaddukte an zwei- bis fünfwertige Alkylenamine mit 2 bis 12 C-Atomen oder Propylenoxid/Ethylenoxid-Blockpolymerisate enthalten.

4. Pigmentzubereitungen nach den Ansprüchen 1 bis 3, die als oberflächenaktives Mittel (c) Umsetzungsprodukte von Ethylendiamin mit Propylenoxid und Ethylenoxid mit einem mittleren Molekulargewicht von 3000 bis 40 000 enthalten.

5. Pigmentzubereitungen nach den Ansprüchen 1 bis 4, enthaltend
a) 50 bis 94 Gew.-% des organischen Pigments;
b) 3 bis 30 Gew.-% des Harzes mit einer Säurezahl von ≥ 200;
c) 3 bis 20 Gew.-% des nichtionischen oberflächenaktiven Mittels.

6. Verfahren zur Herstellung der Pigmentzubereitungen, dadurch gekennzeichnet, daß man es gemäß den in Anspruch 1 definierten Verfahrensschritten vornimmt.

7. Verfahren nach Anspruch 6, dadurch gekennzeichnet, daß man das Harz (b) in gelöster Form zu der Pigmentsuspension gibt und anschließend in Gegenwart des oberflächenaktiven Mittels (c) durch Zugabe einer anorganischen oder organischen Säure auf die Pigmentteilchen auffällt.

8. Verwendung der Pigmentzubereitungen gemäß den Ansprüchen 1 bis 5 zur Pigmentierung von wasserverdünnbaren Druckfarben und Lacken.

9. Wasserverdünnbare Druckfarben und Lacke, enthaltend die Pigmentzubereitungen gemäß den Ansprüchen 1 bis 5.
